# EUROPEAN PATENT SPECIFICATION

(11) **EP 2 532 392 B1**
(45) Date of publication and mention of the grant of the patent: **01.11.2017**
(21) Application number: 11740081.2
(22) Date of filing: 11.02.2011
(51) Int. Cl.: A63B 23/12, G06F 3/01, A63B 21/00, A63B 21/002, A63B 21/06, A63B 23/035, A63B 23/16, G06F 3/038, G06F 3/0362

(54) **PORTABLE HANDLE FOR UPPER LIMB REHABILITATION**
TRAGBARER GRIFF ZUR REHABILITATION DER OBEREN GLIEDMASSEN
MANCHE PORTABLE POUR RÉADAPTATION D'EXTRÉMITÉS SUPÉRIEURES

(30) Priority: 05.02.2010 US 337758 P; 12.02.2010 US 337965 P
(43) Date of publication of application: 12.12.2012
(73) Proprietor: Instituto Nacional De Astrofísica, Óptica Y Electronica, 72840 Puebla (MX)
(72) Inventor: SUCAR-SUCCAR, Luis Enrique, 72840 Puebla (MX); LUIS-VALÁZQUEZ, Roger, 72840 Puebla (MX); CARRILLO-LOPEZ, David, 72840 Puebla (MX); HERNANDEZ-FRANCO, Jorge, 14269 México D.F. (MX); CORDERO-CESAR, Rigoberto Enrique, 72840 Puebla (MX)
(74) Representative: Pons
(86) International application number: PCT/MX2011/000020
(87) International publication number: WO 2011/096787

(56) References cited:
- WO-A1-2009/141460
- WO-A2-2008/047355
- JP-A- 2002 272 795
- US-A1- 2006 205 565
- US-A1- 2008 132 388
- US-A1- 2008 132 388
- US-A1- 2009 298 590
- US-B1- 6 613 000

## Description

### FIELD OF THE INVENTION

The present invention is related to instruments and devices used in rehabilitation medicine to restore mobility in the upper extremities of patients that have suffered injuries caused by knocks or cerebrovascular diseases or other type of diseases, and in particular, is related to a portable handle for rehabilitation of upper extremities to be used in rehabilitation to restore the motility of the upper extremities of patients that require it.

### BACKGROUND OF THE INVENTION

Each year, millions of people in the world suffer diseases or accidents that cause them to lose their motor skills. A clear example of this, are cerebrovascular diseases, commonly known as strokes. Approximately 80% of people that survive a stroke lose the skill to move arms and hands.

The most common treatment to recover movement consists in intensive and occupational therapy for several weeks after suffering the stroke. However, hospital systems have increasing budget limitations; therefore, rehabilitation treatments are becoming more reduced and patients are sent home in a premature manner without a correct and vital rehabilitation. The hiring of professional physical therapy is not viable for the majority of patients due to the high costs of therapy sessions.

In light of the above, patients try to rehabilitate by themselves carrying out exercises assigned at the hospital, but they do it in an adequate manner, as they don't have adequate preparation or guidance, bringing as consequence low or null advances in their rehabilitation. Other times, due to laziness or lack or motivation, patients do not exercise.

In order for self-guided home therapy systems to reach a greater number of patients it is necessary that their prices are affordable.

Several systems have been developed in order to help patients to recover mobility in their upper extremities, either arm or hand. The majority of them consist in complex robotic arms or globes with sensors to detect the movements of the patient's arm, which make them expensive and unaffordable for most of patients.

An example of the foregoing is the diagnostic and rehabilitation system discussed in US Patent No. US 5,830,160 which provides a guide that might be used to quantify the damage or lesion of an extremity (preferably upper extremities) which is also used to diagnose if damages or passive, active or reflexive lesions limit movement. Likewise, said system is used to quantify the resistance to movement offered by the extremity in a limited working area and also provides means for the user to exercise movement of one extremity.

A disadvantage of the aforementioned system is that it requires a metallic structure with considerable dimensions, which can not be folded in a system with a smaller size; therefore, it has a limited transportation capacity. On the other hand, due to the amount of moving parts that form the structure of said invention, its reliability with regard to shelf life is reduced.

Another example of the devices in the state of the art is the device of the US Patent No. US 5,080,350 , which is used for physical rehabilitation, exercising and conditioning of injured arms and shoulders as well as the body's upper part. The patient shall hold a handle or wind and rotate a metallic arm against an adjustable mean of resistance in a 360° interval. The handle is fixed to a rotating device which is universally adjustable in elevation, angle or inclination, handle extension and tension, which might be applied simultaneously with 360° of rotation. The device makes possible the simulation and reproduction of the rank of movement in accordance with the natural movements of arms, shoulders and the upper part, thereby establishing more natural, effective and efficient means for exercise and rehabilitation.

Although said device has many possible configurations, it does not have the feedback required by the patient in order to know if he/she is carrying out the therapy in an adequate manner. Additionally, said device requires to be fixed in a sufficiently resistant and wide base, in order to give the necessary support to the device avoiding movement; therefore, said device is not transported easily.

Another example of this kind of systems is discussed in the US Patent No. US 2006/0064042 which mentions a system and device to carry out isometric exercise both for diagnostic and therapeutic purposes. When used in diagnostic mode, the device is programmed to carry out standardized diagnostic protocols previously stored in the internal memory of the device; during said protocols the device provides both visual and auditory signals which guide the patient, through the use of mathematical algorithms for the measuring of strength. When used for therapy, the device can only be programmed for exercise within the therapeutic limits. Likewise, during therapeutic tests, the patient is guided in a visual and auditory manner through the test sequence and information obtained during the protocol sequence are recorded and stored in the device's memory.

However, a disadvantage of the aforementioned device is that it can only measure the pressure strength that the patient exerts on said device. Likewise, it does not have a feedback mean (imaging) that allows the user to see the therapeutic evolution of his/her physical condition. Moreover, the patient due to the monotony of the therapy, might lose interest leaving treatment before seeing significant results.

On the other hand, the article titled "Evaluation of Upper Extremity robot-assistance in Subactute and Chronic Stroke Subjects" written by Jaka Ziherl for the magazine Journal of NeuroEngineering and Rehabilitation of 2010 , discusses a study carried out with a series of patients that have suffered cerebrovascular accidents with seriously compromised movement of some extremity (hands and/or legs). In said study, they used the robot "HapticMaster" of the company Moog FCS Inc. which confers two degrees of translational freedom and one rotational. Additionally, it has a fastening mechanism fixed to a universal suspension which allows the reorientation of the user's hand. Additionally, said study included an LCD display which showed images in a virtual environment in order to make exercises more pleasant and entertaining. As conclusion, it was observed that patients show an improvement with this type of rehabilitation sessions, however, "HapticMaster" robotic arm is expensive and needs to be installed in the place in which therapy is going to be carried out by trained staff, which limits its use and distribution.

From the state of the art it is known document US-20080132388 which discloses an apparatus, system, and method for isometric exercise that reduces resting blood pressure and increases overall cardiovascular health. The apparatus includes a grip configured to provide natural resistance to force and maximize user comfort. The system includes squeezing the grip of the apparatus with a force that is less than the maximum squeeze force of the user, thereby reducing blood flow through contracting arm muscles and safely increasing blood pressure during exercise. Resting blood pressure is reduced through regular use of the system. The method includes measuring and recording the maximum squeeze force of a user, calculating a fractional force using the duration of exercise or a desired fractional force percentage, and alternately inducing the user to apply the fractional force for a calculated time and inducing the user to apply a lesser fractional force or no force for a calculated time.

In accordance with the foregoing, it is possible to conclude from the state of the art that there exist several devices that allow the rehabilitation of upper extremities of patients, but all of them have the inconvenience of having a high cost and requiring the patient to travel to a rehabilitation place, with cost increases due to traveling and use of the infrastructure in which the rehabilitation instruments or devices are located, neither do they illustrate a device which is portable and easily connectable to personal computer or other user interfaces for the adequate rehabilitation of upper extremities.

### BRIEF DESCRIPTION OF THE INVENTION

The present invention refers to a portable handle for rehabilitation of upper extremities to be used in rehabilitation to restore the motility of the upper extremities of a patient that requires it, which consists of: a main body that structurally supports the portable handle for rehabilitation of upper extremities, which is preferably hollow inside; application means of force or pressure located in the front face of the main body contained in a support that fixes them; a support zone located on the posterior part of said main body in order to provide a better grip in the user's hand; information processing means located inside of the main body and located in a contiguous manner to the application means of force or pressure; a communication mean to transmit the magnitude of the force or pressure applied by the application means of force or pressure; and, energy supply means in order to allow the operation of the information processing means.

Additionally, the portable handle for the rehabilitation of upper extremities might include a visual identification mean for the space localization of the portable handle for rehabilitation of upper extremities, through image acquisition means. In an alternative modality, the portable handle for rehabilitation of upper extremities includes a fastening mean in order to hold the portable handle for rehabilitation of upper extremities in control of the user and prevent the user from releasing it, and/or allowing the correction, in its case, of the wrist's position with respect to the forearm in order to carry out the rehabilitation exercises in a correct manner.

### OBJECT OF THE INVENTION

Taking into consideration the deficiencies of the aforementioned art, it is an object of the present invention to provide a portable handle for rehabilitation of upper extremities in order to be used in rehabilitation to restore motility of the upper extremities of the patients that require it, with a simple design and construction, but highly effective in the rehabilitation of said patients.

It is an additional object of the present invention to provide a portable handle for rehabilitation of upper extremities to be used in rehabilitation to restore the motility of upper extremities of patients that require it, which have enough sensibility to register minimal variations of force and pressure.

An additional object of the present invention is to provide a portable handle for rehabilitation of upper extremities to be used in rehabilitation to restore the motility of upper extremities of patients that require it, which may register the force or pressure exerted by the grip of one hand of the user and evaluate the progress of the rehabilitation.

It is another object of the present invention to provide a portable handle for the rehabilitation of upper extremities to be used in rehabilitation to restore motility of upper extremities of patients that require it, which is portable and light, but at the same time robust in its construction in order to avoid damage to its components.

It is yet an object of the present invention to provide a portable handle for rehabilitation of upper extremities to be used in rehabilitation to restore the motility of upper extremities of patients that require it, with an ergonomic design that allows the use of auxiliary components, such as a harness that allows to firmly hold said handle to the user's extremity and ensure the holding of the same and the adequate position.

It is still another object of the present invention, to provide a portable handle for rehabilitation of upper extremities to be used in rehabilitation to restore the motility of upper extremities of patients that require it, with a low cost and portability.

### DESCRIPTION OF THE DRAWINGS

The innovative aspects considered as characteristic of the present invention, shall be established with particularity in the enclosed claims. However, the invention itself, due to its organization, as well as its method of operation, in conjunction with other objects and advantages of the same, shall be covered to a greater extent in the following detailed description of a specific modality, when read in relation with the accompanying drawings, in which:
Figure 1 is a view in perspective of a portable handle for rehabilitation of upper extremities to be used in rehabilitation to restore motility of the upper extremities of patients that require it, built in accordance with the principles of a particularly preferred modality of the present invention.
Figure 2 is a front view of the portable handle for rehabilitation of upper extremities shown in figure 1.
Figure 3 is an exploded view of the portable handle for the rehabilitation of upper extremities shown in figure 1.
Figure 4 is a front view of the modality of the means of information processing consisting of an integrated circuit board that is part of the portable handle for rehabilitation of upper extremities shown in figure 1.
Figure 5 is a posterior view of the integrated circuit board shown in figure 4.
Figure 6 is a view in perspective of the portable handle for rehabilitation of upper extremities to be used in rehabilitation to restore motility of the upper extremities of patients that require it, built in accordance with the principles of a first alternative modality of the present invention.
Figure 7 is a front view of the portable handle for rehabilitation of upper extremities shown in figure 6.
Figure 8 is an exploded view of the portable handle for rehabilitation of upper extremities shown in figure 6.
Figure 9 is a front view of the modality of the information processing means consisting of an integrated circuit board that is part of the portable handle for rehabilitation of upper extremities shown in figure 6.
Figure 10 is a posterior view of the integrated circuit board shown in figure 9. Figure 11 is a flow chart that describes the operation of the portable handle for rehabilitation of upper extremities of the present invention.
Figures 12 and 12A are views in perspective of the portable handle for rehabilitation of upper extremities to be used in rehabilitation to restore motility of the upper extremities of patients that require it, built in accordance with the principles of a second alternative modality of the present invention.
Figure 13 is a front view in perspective of a fastening mean for the use of the portable handle for rehabilitation of upper extremities of the present invention.
Figure 14 is a posterior view in perspective of the fastening mean shown in figure 13.

### DETAILED DESCRIPTION OF THE INVENTION

As shown in the background of invention chapter, there exists a great amount of people that due to a disease or accident have loss motility in their extremities, specifically the upper extremities, disabling them in a temporary or, in the worst cases in a definite manner. Therefore, a portable handle 100 for rehabilitation of upper extremities has been developed with the function and main objective of providing a mean to register the movement and force or pressure exerted by the grip of one hand of the user, in such a manner that the progress of the rehabilitation of said user may be evaluated when the same uses user interface means for rehabilitation.

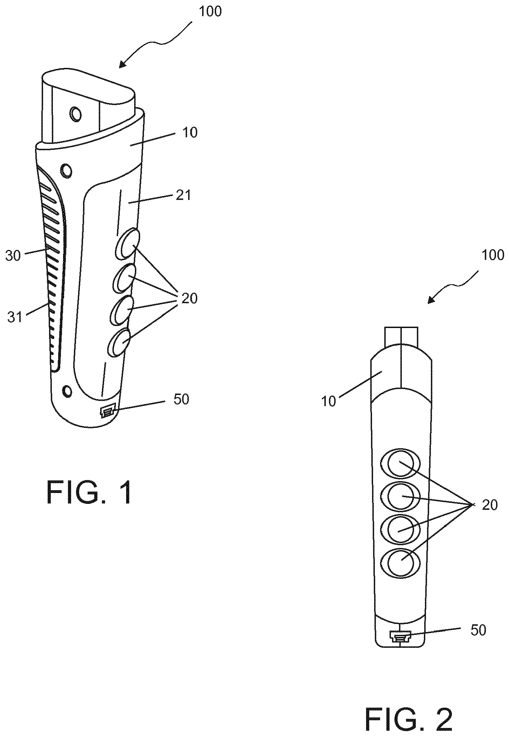

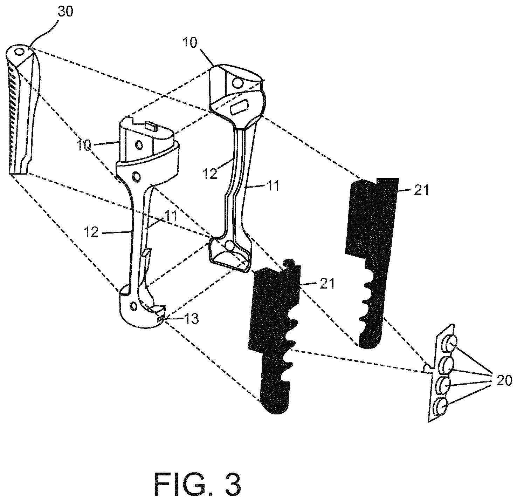

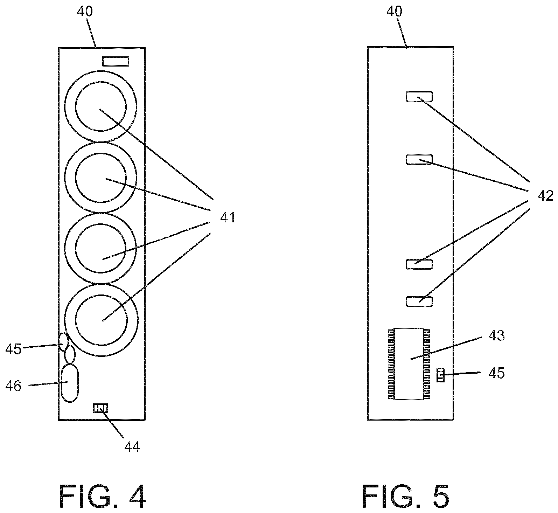

Referring to the accompanying drawings, and more specifically figures 1 to 5 of the same, the portable handle for rehabilitation of upper extremities 100 of the present invention is formed by: a main body 10 which structurally supports the portable handle for rehabilitation of upper extremities 100, which is preferably hollow inside; application means of force or pressure 20 which are located in the main body 10 in an adequate position for the application of a force or pressure by the user, preferably in the front face of the main body 10, and are preferably contained in a support 21 which fixes them; a support zone 30 located in an adequate position for the application of force or pressure by the user, preferably located in the posterior part of said main body 10, in order to provide a better grip of the user's hand; information processing means 40 to receive information of the force or pressure exerted by the user on the application means of force or pressure and convert the magnitude of said force or pressure in a signal of force or pressure that is legible by user interface means (not shown in the figure) for the rehabilitation of upper extremities; a communication mean 50 to transmit to the user interface means the signal of forcer or pressure; and an energy supply mean to energize the information processing means 40. In the illustrated modality, the communication mean 50, serves as well as a mean to supply electrical power to the information processing means. Likewise, the information processing means, the communication mean and the energy supply mean are located in the main body 10 in such a position that they do not obstruct the exertion of the force or pressure by the user when connected to the portable handle with user interface means and/or a power supply.

In the illustrated modality, the information processing means 40 are located inside the main body 10; the communication mean 50 is located in the frontal face of the main body 10 under the application means of force or pressure 20.

With regard to the application means of force or pressure 20, these consist preferably, in, at least, one element of application of force or pressure, and more preferably they are a plurality of elements of application of force or pressure. In the illustrated modality, these are a plurality of buttons, as shown in the drawings.

Likewise, it is preferred that the information processing means 40 are an integrated circuit board, as illustrated in the drawings, connected to the application means of force or pressure 20, as the energy supply means and the communication mean 50.

Furthermore, it is preferred that a sole element carries out the function of power supply and communication, therefore, in the modality illustrated in the drawings, the communication mean 50 and the energy supply mean are a connection port selecting from USB, miniUSB or microUSB, being more preferred the miniUSB port. However, it is worth noting that in an additional modality, the communication mean might be wireless and the energy supply mean might be independent through a battery or a direct or alternating current supply.

The main body 10 of the preferred modality illustrated has an elongated shape and is preferably formed of two vertical parts with an ergonomic shape that gives the user a greater and better comfort during its use, as said user, depending on the seriousness of the lesion, shall assign a greater amount of time to his/her rehabilitation. Said main body 10 includes a couple of housings, from which; a first housing 11 is located on its front face to house the support 21 containing the plurality of buttons 20, and a second housing 12 is located in the rear face of said main body 10 to house the support zone 30. Additionally, the main body 10 includes an opening 13 located in the lower end of the front face to house inside the communication means and the energy supply means 50.

The application means of force and pressure 20 in the described preferred modality are formed by 4 buttons arranged in a vertical manner and separated equidistantly one from another, in which the function of said buttons 20 is to transfer the force or pressure exerted by the user to the integrated circuit board 40.

The support zone 30 is formed by a plastic material substrate that includes a plurality of slots 31 which provide a better grip for the user's hand.

The integrated circuit board 40 used as information processing means, in a preferred modality includes a plurality of transducers 41 of the type of Force Dependent Resistors (FDR), which have the characteristic of varying their value in function of the force or pressure exerted by the plurality of buttons 20, in such a manner that the measuring of the variation of force or pressure of said transducers 41 is sufficiently sensible to register changes, even when the user has not enough force in the hand holding the portable handle for rehabilitation of upper extremities 100 of the present invention; a plurality of resistances 42, in which each of the resistances 42 is interconnected to each of the transducers 41; a microcontroller 43 located in the lower part of said integrated circuit board 40; and an out 44 interconnected directly to the communication means and energy supply means 50.

Additionally, interconnected to the microcontroller, a plurality of capacitors 45 and a resonating crystal 46 are located, which provide the electric and electronic characteristics necessary for the input signals of the microcontroller 43 for its correct operation.

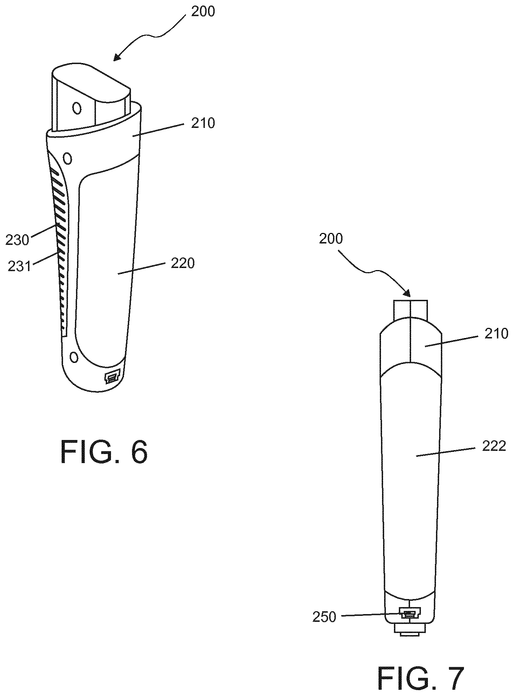

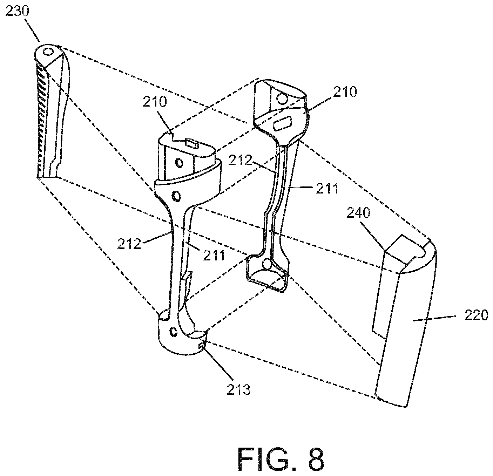

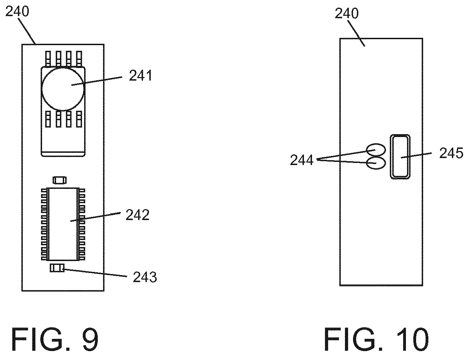

Referring, more specifically to figures 6 to 10 from the accompanying figures, they show a portable handle for rehabilitation of upper extremities 200 to be used in rehabilitation to restore the motility of the upper extremities of a patient that requires it, built in accordance with a first alternative modality of the present invention, which consists of: a main body 210 which structurally supports the portable handle for rehabilitation of upper extremities 200, which is hollow inside; application means of force or pressure, that in this modality in particular consist of a sole element of application of force or pressure in the form of force or pressure 220 located in the front face of the main body; a support zone 230 located in the posterior part of said main body 210 to provide a better grip to the user's hand; information processing means consisting of an integrated circuit card 240 located inside the main body 210 and located in a contiguous manner to the zone of force or pressure 220; and the communication means and energy supply means consisting in a miniUSB connection port 250 located preferably in the front face of the main body 210 under the zone of force or pressure 220, which function is to transmit the force or pressure values, as well as supplying electric power to the integrated circuit board 240.

The main body 210 is of an elongated shape preferably, with an ergonomic shape that gives the user a greater and better comfort during its use, as said user, depending on the seriousness of the lesion, shall assign a greater amount of time to his/her rehabilitation. Said main body 210 includes a couple of housings, from which; a first housing 211 is located in its front face to receive the zone of force or pressure 220, and a second housing 212 that is located in the rear face of said main body 210 to house a support zone 230. Additionally, the main body 210 includes an opening 213 to house inside the miniUSB250 connection port.

The zone of force or pressure 220 is formed by a plastic material substrate as a sole element of application of force or pressure, in which the function of said zone of force or pressure 220 constitutes the application means of force or pressure, by transferring the force or pressure exerted by the user towards the integrated circuit board 240.

The support zone 230 is formed by a plastic material substrate that includes a plurality of slots 231 which provide a better grip to the user's hand.

The integrated circuit board 240 includes in this modality a sole element of application of force or pressure, a pneumatic pressure transducer 241 which possesses an operational pressure interval that goes from 15kpa to 115kpa, with the function of measuring, in the form of pressure, the variation of force inside the zone of force or pressure 220; a microcontroller 242 located in the inferior part of said integrated circuit board 240; and an output 243 that is interconnected directly to the miniUSB 250 port.

Additionally, a plurality of capacitors 244 interconnected to the microcontroller 242 as well as a crystal resonator 245, which provide the electric and electronic characteristics, respectively, necessary for the input signals of the microcontroller242 to operate correctly.

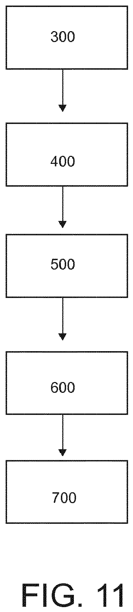

With the intention of describing the operation of the portable handle for rehabilitation of upper extremities 100 of the preferred modality of the present invention, we refer to figure 11 of the accompanying drawings, which it shows a flow chart that includes the stages detailed below:
a. Initialization stage 300: the portable handle for rehabilitation of upper extremities 100 is powered by energy supply means and interconnected to user interface means for the rehabilitation of upper extremities. User interface means consist preferably of a personal computes (not shown in the drawings), and include communication means compatible with the communication means 50 of the portable handle for the rehabilitation of upper extremities 100, in which said user interface means include a preestablished rehabilitation program dependent on the force or pressure exerted by the user, and communication means. Preferably, the f communication 50 means of the portable handle consist of a miniUSB port and are connected through a transference cable USB-miniUSB of commercial type to a USB port of the computer, in which case, said miniUSB port supplies energy as well to the portable handle for rehabilitation of upper extremities 100.
b. Stage of reception of force or pressure 400: whereas the portable handle for rehabilitation of upper extremities 100 has been powered, the user might start to exert force or pressure independently on the application means of force or pressure 20.
c. Stage of sensing of force or pressure 500: after the user has applied force or pressure in the application means of force or pressure 20, the force or pressure is transferred to the information processing means for their conversion into a signal correlated with the magnitude of the applied force or pressure, that in the illustrated modality include a transducer 41, which translates the force or pressure into an analogue signal correlated to their magnitude which is sent to a microcontroller 43.
d. Stage of conversion of signal of force or pressure 600: The information processing means convert the signal correlated with the magnitude of the force or pressure applied by the user into a signal of force or pressure that is legible by the user interface means. In the illustrated modality, the analogue signal is converted into a digital signal through the microcontroller 43.
e. Stage of sending of information 700: the signal of force or pressure, in the illustrated modality, having been digitalized, is sent from the information processing means through the communication means 50 to the user interface. In the illustrated modality, this operation is carried out using the USB-miniUSB transference cable.

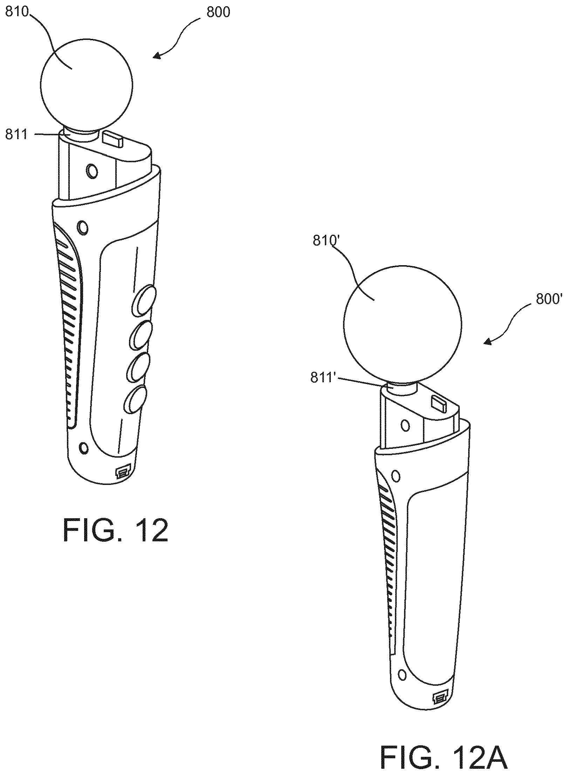

Referring more specifically to figures 12 and 12A of the accompanying drawings, these show portable handles for rehabilitation of upper extremities 800 and 800' to be used in rehabilitation to restore the motility of the upper extremities of a patient that requires it, built in accordance with a second alternative modality of the present invention, which, additionally includes: a visual identification mean for the space localization of the portable handle for rehabilitation of upper extremities through image acquisition means. In the illustrated modality, the visual identification mean consists in at least one translucent sphere 810 and 810' respectively, located on one of the ends and more preferably inserted in a post 811 and 811' respectively, located in the upper end of the main body, in such a manner that said portable handles for rehabilitation of upper extremities 800 and 800' are used in a separate manner each or in conjunction with an image visualization element, such as a computer monitor (not shown in the figures) and image acquisition means, such as a video camera (not shown in the figures) that are part of the user interface means, as it happens in the therapy system of 3D monocular monitoring, measuring the movement of the user's arm. Likewise, the portable handles for rehabilitation of upper extremities 800 and 800' in the illustrated modality include at least a LED located in the integrated circuit board to illuminate the translucent sphere 810 and 810', respectively and improve the space location of the same when received by the user interface means. It's worth mention that in an additional modality, spheres 810 and 810' might be opaque and colored.

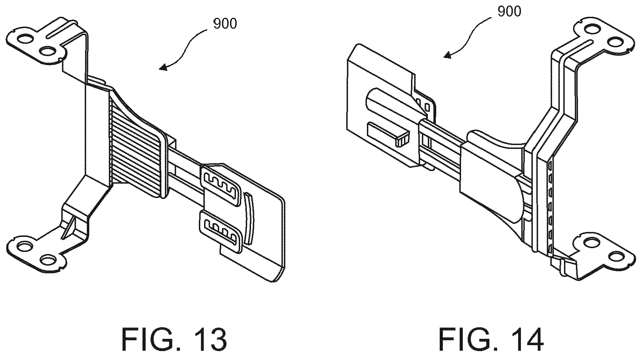

Referring now to figures 13 and 14 of the accompanying figures, these show a fastening mean 900 for the achievement of safe fastening for the user that requires it, as said, auxiliary component 900 is preferably fastened to the forearm, wrist or hand of the user in order to ensure that said user does not release the portable handle of the present invention, besides allowing the correction, in its case, of the position that the wrist keeps with regard to the forearm so that the user may continue with his/her exercises in a correct manner. Said fastening mean 900 shown in the specific modality of said figures is a harness.

In light of the foregoing, it could be observed that the portable handle for rehabilitation of upper extremities of the present invention has been engineered in order to provide a device that is robust and at the same time light, of low cost, ergonomic and of easy operation, useful in the rehabilitation and recovery of motility of upper extremities in patients that require it, and it shall evident for any expert in the matter, that the modalities of said portable handle for rehabilitation of upper extremities herein described and shown, are illustrative but no limitative of the present invention, as many changes of consideration are possible in their details but these are not apart from the invention's scope. Therefore, the present invention shall not be considered as restricted except for the requirements of the foregoing art and the scope of the enclosed claims.

## Claims

1. A portable handle for rehabilitation of upper extremities to restore the motility of the same in a user, the portable handle (100) comprising: a main hollow body (10); at least one element of application of force (20) located in the front face of the main body (10) in a position that allows the application of a force by the user; a support zone (30) located in the rear face of the main body in a position which allows the fastening of the handle to the user's hand; information processing means (40) to receive and process the information of the force exerted by the user on the at least one element of application of force (20); user interface means which include a prestablished rehabilitation program dependent from the force exerted by the user; communication means (50) to transmit a signal of force to the user interface means;
the portable handle being **characterized in that** the information processing means (40) register variations on a magnitude of the force exerted by the user on the at least one element of application of force (20), and convert such variations on a magnitude of the force signal which will be interpreted by the user interface means to use the prestablished rehabilitation program depending on such variations on the magnitude of the force applied by the user.

2. The portable handle for rehabilitation of upper extremities in accordance with claim 1, **characterized in that** the at least one element of application of force (20) consist in a plurality of buttons vertically disposed.

3. The portable handle for rehabilitation of upper extremities in accordance with claim 2, **characterized in that** the handle further comprises a support (21) on the front face of the main body (10), under the plurality of buttons to fix them.

4. The portable handle for the rehabilitation of upper extremities in accordance with claim 2, **characterized in that** the information processing means (40) consist in an integrated circuit board that includes at least one transducer (41) of the type Force Dependent Resistor (FDR) compatible with the at least one element of application of force (20) to detect a variation on the force exerted by the user and measure the same in the form of an analogue signal; at least one resistance (42) compatible with the at least one element of application of force (20), being the at least one resistance (42) interconnected to the transducer (41); a microcontroller (43) to convert the analogue signal into a digital signal, interpretable by the user interface means; and, an output of signal that interconnects directly with the communication means (50).

5. The portable handle for the rehabilitation of upper extremities in accordance with claim 1, **characterized in that** the at least one element of application of force (20) comprise a sole element of application of force (200) in the front face of the main body (210).

6. The portable handle for the rehabilitation of upper extremities in accordance with claim 5, **characterized in that** the information processing means consist in an integrated circuit board (240) that includes at least one transducer (241) of the type of pneumatic pressure, with an operating pressure interval that goes from 15kpa up to 115kpa, compatible with the at least one element of application of force to detect the force exerted by the user and measure the same in the form of an analogue signal; a microcontroller (242) to convert the analogue signal into a digital signal, interpretable by the user interface means; and, a signal output interconnected directly with the communication means.

7. The portable handle for the rehabilitation of upper extremities in accordance with any of the precedent claims, **characterized in that** the support zone (30) consists on a plastic material substrate.

8. The portable handle for the rehabilitation of upper extremities in accordance with any of the precedent claims, **characterized in that** it further comprises, a visual identification means (810) for the space localization of the portable handle through image acquisition means.

9. The portable handle for rehabilitation of upper extremities in accordance with claim 8, **characterized in that** the image acquisition means is a video camera.

10. The portable handle for rehabilitation of upper extremities in accordance with claim 8, **characterized in that** the visual identification mean (810) consists in at least one sphere located in the upper end of the portable handle.

11. The portable handle for rehabilitation of upper extremities in accordance with claim 10, **characterized in that** said at least one sphere is translucent and the handle comprises at least one LED located in the information processing means to illuminate said translucent sphere.

12. The portable handle for rehabilitation of upper extremities in accordance with claim 10, **characterized in that** said sphere is opaque and colored.

13. The portable handle for rehabilitation of upper extremities in accordance with claim 9, **characterized in that** the handle is used in a joint manner with a user interface with capacity of monitoring monocular 3-D therapy, measuring the movement of the user's arm.

14. The portable handle for rehabilitation of upper extremities in accordance with any of the precedent claims, **characterized in that** the handle additionally includes a fastening mean (900) to fasten the portable handle for rehabilitation of upper extremities in control of the user and prevent the user from releasing it, and/or allow the correction, in its case, of the position that the wrist keeps with regard to the forearm in order to carry out rehabilitation exercises in a correct manner.

15. The portable handle for rehabilitation of upper extremities in accordance with claim 14, **characterized in that** the fastening mean (900) is a harness.

## Patentansprüche

1. Ein tragbarer Griff für die Rehabilitation der oberen Extremitäten der Benutzers, um die Beweglichkeit der selben wiederherzustellen, wobei der tragbare Griff (100) folgendes beinhaltet: einen
Haupthohlkörper (10); wenigstens ein Element für die Krafteinwirkung (20), das auf der Vorderseite des Hauptkörpers (10) so in einer Position angebracht ist, dass es eine Krafteinwirkung durch den Benutzer zulässt; einen Stützbereich (30), der sich auf der Rückseite des Hauptkörpers in einer Position so befindet, dass der Griff an der Hand des Benutzers befestigt werden kann; ein Instrument für die Informationsverarbeitung (40), das Informationen durch die Krafteinwirkung erhält und verarbeitet, die von dem Benutzer auf wenigstens ein Element für die Krafteinwirkung (20) ausgeübt wird; ein Instrument als Benutzerschnittstelle, das ein vorgegebenens Rehabilitationsprogramm enthält, das abhängig von der Kraft funktioniert, die von dem Benutzer ausgeübt wird; ein Kommunikationsinstrument (50), das das Signal der Krafteinwirkung an die Benutzerschnittstelle überträgt; der sich dadurch auszeichnet, dass
das Instrument für die Informationsverarbeitung (40) die Schwankungen der Stärke der Kraft wahrnimmt, die von dem Benutzer auf das wenigstens eine Element für die Krafteinwirkung (20) ausgeübt wird, und dann diese Schwankungen in eine Grössenordnung des Kraftsignals umrechnet, das von der Benutzerschnittstelle interpretiert wird, um das vorgegebene Rehabilitationsprogramm anzuwenden, und zwar in Abhängigkeit dieser Schwankungen in der Stärke der Kraft, die von dem Benutzer ausgeübt wird.

2. Der tragbare Griff für die Rehabilitation der oberen Extremitäten im Einklang mit dem Patentanspruch 1, der sich dadurch auszeichnet, dass das wenigstens eine Element für die Krafteinwirkung (20) aus einer Mehrzahl von Knöpfen besteht, die vertikal untereinander angebracht sind.

3. Der tragbare Griff für die Rehabilitation der oberen Extremitäten im Einklang mit dem Patentanspruch 2, der sich dadurch auszeichnet, dass er ausserdem eine Stütze (21) aufweist, die auf der Vorderseite des Haupthohlkörpers (10) unterhalb der Mehrzahl von Knöpfen angebracht ist, um diese zu befestigen.

4. Der tragbare Griff für die Rehabilitation der oberen Extremitäten im Einklang mit dem Patentanspruch 2, der sich dadurch auszeichnet, dass das Instrument für die Informationsverarbeitung (40) eine integrierte Schaltplatte aufweist, die wenigstens einen Messwertwandler (41) des Typs Force Dependent Resistor (FDR) enthält, der mit dem wenigstens einen Element für die Krafteinwirkung (20) kompatibel ist, um eine Schwankung bei der Kraftstärke festzustellen, die von dem Benutzer ausgeübt wird, und diese Schwankung in Form eines analogen Signals zu messen; wie auch durch wenigstens einen Widerstand (42), der mit dem wenigstens einen Element für die Krafteinwirkung (20) kompatibel ist, wobei der wenigstens ein Widerstand (42) mit dem Messwertwandler (41) verschaltet ist; wie auch durch eine Mikrosteuerung (43), die das analoge Signal in ein digitales Signal um- wandelt, das wiederum durch die Benutzerschnittstelle ausgewertet wird; und schliesslich durch ein Signal-Output, das direkt mit dem Kommunikationsinstrument (50) verschaltet ist.

5. Der tragbare Griff für die Rehabilitation der oberen Extremitäten im Einklang mit dem Patentanspruch 1, der sich dadurch auszeichnet, dass das wenigstens eine Element für die Krafteinwirkung (20) ein einziges Element für Krafteinwirkung (200) auf der Vorderseite des Hauptkörpers (210) enthält.

6. Der tragbare Griff für die Rehabilitation der oberen Extremitäten im Einklang mit dem Patentanspruch 5, der sich dadurch auszeichnet, dass das Instrument für die Informationsverarbeitung aus einer integrierten Schaltplatte (240) besteht, die wenigstens einen Messwertwandler (241) des mit Luftdruck betriebenen Typs enthält, der innerhalb eines Intervalls von 15kpa bis zu 115kpa betrieben wird und mit dem wenigstens einen Element für die Krafteinwirkung kompatibel ist, der die Stärke der Kraft feststellt, die von dem Benutzer ausgeübt wird und diese in Form eines analogen Signals misst; wie auch durch eine Mikrosteuerung (242), die das analoge Signal in ein digitales Signal umwandelt, das wiederum durch die Benutzerschnittstelle ausgewertet wird; und schliesslich durch ein Signal-Output, das direkt mit dem Kommunikationsinstrument verschaltet ist.

7. Der tragbare Griff für die Rehabilitation der oberen Extremitäten im Einklang mit irgendeinem der vorangehenden Patentansprüche, der sich dadurch auszeichnet, dass die Grundlage des Materials für den Stützbereich (30) ein Kunststoffmaterial ist.

8. Der tragbare Griff für die Rehabilitation der oberen Extremitäten im Einklang mit irgendeinem der vorangehenden Patentansprüche, der sich dadurch auszeichnet, dass er ausserdem ein visuelles Erkennungsinstrument (810) für die Lokalisierung des tragbaren Griffs im Raum durch ein Bildaufnahmeinstrument aufweist.

9. Der tragbare Griff für die Rehabilitation der oberen Extremitäten im Einklang mit dem Patentanspruch 8, der sich dadurch auszeichnet, dass das Bildaufnahmeinstrument eine Videokamera ist.

10. Der tragbare Griff für die Rehabilitation der oberen Extremitäten im Einklang mit dem Patentanspruch 5, der sich dadurch auszeichnet, dass das visuelle Erkennungsinstrument (810) aus wenigstens einer Kugel besteht, die an dem oberen Ende des tragbaren Griffs angebracht ist.

11. Der tragbare Griff für die Rehabilitation der oberen Extremitäten im Einklang mit dem Patentanspruch 10, der sich dadurch auszeichnet, dass die genannte wenigstens eine Kugel lichtdurchlässig ist und dass der Griff wenigstens eine Leuchtdiode aufweist, die sich in dem Instrument für die Informationsverarbeitung befindet und die genannte lichtdurchlässige Kugel erleuchtet.

12. Der tragbare Griff für die Rehabilitation der oberen Extremitäten im Einklang mit dem Patentanspruch 10, der sich dadurch auszeichnet, dass die genannte Kugel trüb und farbig ist.

13. Der tragbare Griff für die Rehabilitation der oberen Extremitäten im Einklang mit dem Patentanspruch 9, der sich dadurch auszeichnet, dass der Griff zusammen mit einer Benutzerschnittstelle benutzt wird, die in der Lage ist, monokulär 3-D Therapie zu überwachen, indem die Bewegungen des Arms des Benutzers gemessen werden.

14. Der tragbare Griff für die Rehabilitation der oberen Extremitäten im Einklang mit irgendeinem der vorangehenden Patentansprüche, der sich dadurch auszeichnet, dass er zusätzlich eine Befestigungsvorrichtung (900) aufweist, um den tragbaren Griff für die Rehabilitierung der oberen Extremitäten von dem Benutzer steuerbar zu befestigen und vorzubeugen, dass der Benuzter den Griff loslässt, und/oder um gegebenenfalls eine Korrektur der Position vorzunehmen, die das Handgelenk in Bezug auf den Unterarm einhält, um so die Rehabilitationsübungen in korrekter Art und Weise auszuführen.

15. Der tragbare Griff für die Rehabilitation der oberen Extremitäten im Einklang mit dem Patentanspruch 9, der sich dadurch auszeichnet, dass die Befestigungsvorrichtung (900) ein Haltegurt ist.

## Revendications

1. Un manche portatif (ou poignée portable) (100) ; destiné à la rééducation des membres supérieurs à des fins de récupération de la mobilité de ces derniers par un utilisateur, le manche comportant :
un corps creux principal (10) ; au moins un élément d'application de force (20) situé sur la face avant du corps principal (10) dans une position qui permet l'application d'une force par l'utilisateur ; une surface d'appui (30) située sur la face arrière du corps principal dans une position qui permet à l'utilisateur de saisir le manche ; un outil de traitement des informations (40) pour recevoir et traiter les informations concernant la force appliquée par l'utilisateur sur au moins un élément d'application de force (20) ; un outil d'interface utilisateur qui inclut un programme de rééducation préconfiguré en fonction de la force appliquée par l'utilisateur ; un outil de communication (50) pour transmettre un signal de force à l'outil d'interface utilisateur et qui se caractérise comme suit :
l'outil de traitement des informations (40) enregistre les variations de magnitude de la force appliquée par l'utilisateur sur au moins un élément d'application de force (20), puis convertit les variations de magnitude du signal de force qui sera interprété par l'outil d'interface utilisateur pour exécuter le programme de rééducation préconfiguré en fonction des variations de magnitude de la force appliquée par l'utilisateur.

2. Le manche portatif pour la rééducation des membres supérieurs conformément à la revendication 1, qui se **caractérise par le fait que** l'au moins un élément d'application de force (20) comporte une série de boutons alignés verticalement.

3. Le manche portatif pour la rééducation des membres supérieurs conformément à la revendication 2, qui se **caractérise par le fait que** le manche comporte également un support (21) sur la face avant du corps principal (10), sous la série de boutons pour les fixer.

4. Le manche portatif pour la rééducation des membres supérieurs conformément à la revendication 2, qui se **caractérise par le fait que** l'outil de traitement des informations (40) comporte une carte de circuits intégrés incluant au moins un transducteur (41) de type RDF (résistance dépendant de la force) compatible avec au moins un élément d'application de la force (20) pour détecter une variation de la force appliquée par l'utilisateur et mesurer celle-ci sous la forme d'un signal analogique ; au moins une résistance (42) compatible avec au moins un élément d'application de la force (20), étant l'au moins une résistance (42) reliée au transducteur (41) ; un microcontrôleur (43) pour convertir le signal analogique en signal numérique, interprétable par l'outil d'interface utilisateur ; et une sortie de signal reliée directement à l'outil de communication (50).

5. Le manche portatif pour la rééducation des membres supérieurs conformément à la revendication 1, qui se **caractérise par le fait qu'**au moins un élément d'application de force (20) comporte un seul élément d'application de force (200) sur la face avant du corps principal (210).

6. Le manche portatif pour la rééducation des membres supérieurs conformément à la revendication 5, qui se **caractérise par le fait que** l'outil de traitement des informations comporte une carte de circuits intégrés (240) incluant au moins un transducteur (241) du type pression pneumatique, avec un intervalle de pression de fonctionnement qui va de 15 à 115 kpa, compatible avec au moins un élément d'application de force pour détecter la force appliquée par l'utilisateur et mesurer celle-ci sous la forme d'un signal analogique ; un microcontrôleur (242) pour convertir le signal analogique en signal numérique, interprétable par l'outil d'interface utilisateur et une sortie de signal reliée directement à l'outil de communication.

7. Le manche portatif pour la rééducation des membres supérieurs conformément à n'importe quelle revendication ci-dessus, qui se **caractérise par le fait que** la surface d'appui (30) comporte un substrat de matière plastique.

8. Le manche portatif pour la rééducation des membres supérieurs conformément à n'importe quelle revendication ci-dessus, qui se **caractérise par le fait qu'**il comporte également un outil d'identification visuelle (810) pour la localisation spatiale du manche portatif au moyen d'outils d'acquisition d'images.

9. Le manche portatif pour la rééducation des membres supérieurs conformément à la revendication 8, qui se **caractérise par le fait que** l'outil d'acquisition d'images est une caméra vidéo.

10. Le manche portatif pour la rééducation des membres supérieurs conformément à la revendication 8, qui se **caractérise par le fait que** l'outil d'identification visuelle (810) comporte au moins une sphère située à l'extrémité supérieure du manche portatif.

11. Le manche portatif pour la rééducation des membres supérieurs conformément à la revendication 10, qui se **caractérise par le fait qu'**au moins une sphère est translucide et le manche comporte au moins une lumière LED située sur l'outil de traitement des informations pour éclairer la sphère translucide.

12. Le manche portatif pour la rééducation des membres supérieurs conformément à la revendication 10, qui se **caractérise par le fait que** la sphère est opaque et de couleur.

13. Le manche portatif pour la rééducation des membres supérieurs conformément à la revendication 9, qui se **caractérise par le fait que** le manche s'utilise conjointement avec une interface utilisateur capable de monitorer la thérapie monoculaire en 3D, en mesurant le mouvement du bras de l'utilisateur.

14. Le manche portatif pour la rééducation des membres supérieurs conformément à n'importe quelle revendication ci-dessus, qui se **caractérise par le fait que** le manche inclut également un mécanisme de fixation (900) destiné à arrimer le manche portatif pour la rééducation des membres supérieurs sous le contrôle de l'utilisateur et empêchant que l'utilisateur ne le lâche, et/ou autorisant la rectification, dans son cas, de la position du poignet par rapport à l'avant-bras dans le but de réaliser correctement les exercices de rééducation.

15. Le manche portatif pour la rééducation des membres supérieurs conformément à la revendication 14, qui se **caractérise par le fait que** le mécanisme de fixation (900) est un harnais.
